**Europäisches Patentamt**

**European Patent Office**

**Office européen des brevets**

(11) Publication number: **0 178 854**
**B1**

(12) **EUROPEAN PATENT SPECIFICATION**

(45) Date of publication of patent specification: **17.01.90**

(21) Application number: **85307277.5**

(22) Date of filing: **11.10.85**

(51) Int. Cl.⁵: **G 10 K 11/02**

(54) Ultrasonic horn assembly.

(30) Priority: **15.10.84 US 660819**

(43) Date of publication of application:
**23.04.86 Bulletin 86/17**

(45) Publication of the grant of the patent:
**17.01.90 Bulletin 90/03**

(84) Designated Contracting States:
**AT BE DE FR GB IT NL SE**

(56) References cited:
**DE-A-2 742 600**
**GB-A- 246 096**
**GB-A- 473 806**
**US-A-2 203 875**

(73) Proprietor: **DEERE & COMPANY**
**1 John Deere Road**
**Moline Illinois 61265 (US)**

(72) Inventor: **Phelan, Joseph**
**5275 Crestview Hieghts Drive**
**Bettendorf Iowa 52722 (US)**
Inventor: **Ferguson, Larry Wayne**
**5172 Coachman Road**
**Bettendorf Iowa 52722 (US)**

(74) Representative: **Pears, David Ashley**
**REDDIE & GROSE 16 Theobalds Road**
**London WC1X 8PL (GB)**

Courier Press, Leamington Spa, England.

## Description

The present invention relates to an ultrasonic horn assembly for directionally transmitting or receiving a beam of ultrasonic energy and of the type set forth in the introductory part of claim 1.

It is known that a directed ultrasonic beam can be produced by placing a conventional ultrasonic vibrator in the throat of a horn, as shown in US Patent No 4,433,398. Such an ultrasonic transmitter is useful in ultrasonic speed sensing systems, such as described in our European application 85303348.8. (EP—A—162 646). For both velocity and distance measuring applications, it is desirable to have a transmitter which produces a narrow beam. For example, in Doppler velocity measurement, a wide transmit beam can cause a noisy reflected signal in that there will be a wide frequency variation in the reflected signals. Similarly, in distance sensing, a wide transmit beam can cause reflections from non-target objects. Therefore, a narrow beam ultrasonic transmitter is desired.

It is already known in horn loudspeakers and shock wave generators to introduce a forwardly-tapering centrepiece into the throat of the horn, in order to improve directionality. See for example US 4,390,078 and US 3,416,628. In US 3,292,727 the centrepiece includes a cylinder chamber which accommodates the piston of a sound generator.

Also, Blatek Industries of Bellafonte, Philadelphia, USA have marketed a product in which a disk-like transducer (8020 Unit) in the throat of a horn has a cone with a flat rear surface closely spaced from the front surface of the transducer to eliminate the effect of the out of phase centre portion of the transducer diaphragm.

An object of this invention is to provide further improvement in the narrow directional pattern of the horn assembly.

The horn assembly according to the invention is defined in the characterising part of claim 1.

In the preferred embodiment of the present invention, a horn has a bending type ultrasonic vibrator mounted in the throat of the horn. A centrepiece is received by a bore at the throat of the horn. The centrepiece includes a ring which receives the vibrator and a head piece which has a stem which is supported coaxially inside the ring by three webs. The head piece includes an annular shoulder surface which surrounds the stem and faces the vibrator. The stem has a blind bore therein which terminates in a flat bottom surface which also faces the vibrator. The head tapers away from the vibrator from a maximum diameter at the edge of the shoulder surface. These elements are sized and positioned so as to significantly reduce the magnitude of the ultrasonic beam secondary lobes in the directional pattern, and to also effectively increase the maximum acoustic power radiated into the atmosphere.

The invention will be described in more detail, by way of example, and with reference to the accompanying drawings, in which:

Fig 1 is a partially exploded, partially sectioned oblique view of a horn assembly embodying the present invention.

Fig 2 is a side view of the assembly of Fig 1 with portions shown in phantom.

Fig 3 is an end view of a mounting ring, viewed from the mouth of the horn.

Figs 4 and 5 are plots of ultrasonic sound pressure level against angle from the horn centre axis for a transducer and horn without and with the centrepiece of the present invention.

The ultrasonic horn assembly 10 includes a hollow cylindrical horn 12 with a bore 14 flaring from a smaller diameter throat portion 16 to a larger diameter mouth portion 18. A cylindrical bore 20 is joined to the throat portion of tapered bore 14 via shoulder 22.

A centrepiece or sonic barrier assembly 24 is mounted in the bore 20. The assembly 24 includes a mounting ring or spider 26 which has an outer ring 28 and an inner ring 30 with webs 32 extending therebetween. The webs are preferably 0.6 mm thick or substantially smaller than the ultrasonic wavelength so that they provide little interference to the ultrasonic transmissions. The outer ring 28 has a tapered bore 34 which extends partway therein and which forms an extension of the throat portion of tapered bore 14. A cylindrical bore 36 is joined to the tapered bore 34 via a shoulder 38. The webs 32 project radially inwardly from the wall of the tapered bore 34.

The centrepiece assembly also includes a head 40 which tapers gradually from a larger diameter base portion 42 to a smaller diameter tip 44. A stem 46 projects from the base 42 and has larger and smaller diameter portions 48 and 50, respectively. The larger diameter portion 48 has the same diameter as that of inner ring 30. An annular shoulder 52 connects the portion 48 to the base 42. The portion 50 is received by the inner ring 30, so that the portion 50 and the inner ring 30 form a blind bore 54 with a flat bottom surface 56. The head 40 may be conically shaped, as shown, or it may taper in some other gradual or smooth manner so as to have a rounded apex, as long as it tapers from the outer edge of the shoulder 52.

A conventional ultrasonic transducer, such as transmitter 60, (for example, a 40 kHz TR—89 transducer manufactured by Massa of Hingham, Massachusetts of a SQ—40TE or SQ—40RE transducer manufactured by Projects Unlimited) is mounted in the bore 36 of the outer ring 28 with the edge of its vibrating surface 62 butted against the shoulder 38. Thus, the vibrating surface 62 is spaced from the inner ring 30 and the webs 32 and the transmitter 60, the horn 12 and the centrepiece assembly are in coaxial alignment. A receiver could be substituted for the transmitter 60.

Although the rings 28, 30 and the head 40 are shown as separate parts, it should be understood they could just as well be formed as one single structure, thereby defining a tapered head, a stem with a blind bore from the head and an annular shoulder between the stem and head. A suitable material for the centrepiece assembly and the horn is an epoxy resin, or any other hard material, such as metal, which would reflect the ultrasonic sound waves.

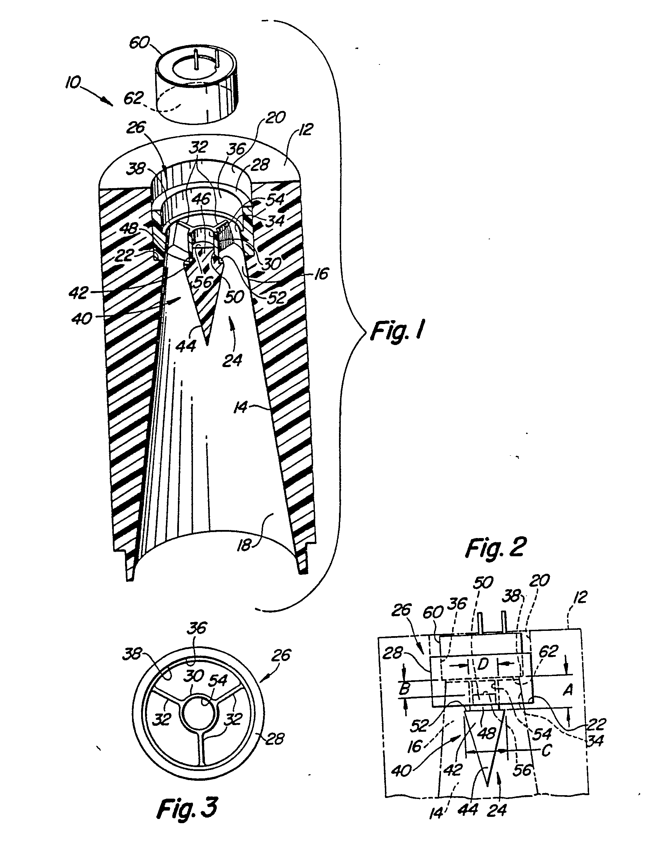

As best seen in Fig 2, A represents the distance between the vibrator surface 62 and the annular shoulder 52, B represents the distance between the surface 62 and the surface 56, C represents the outer diameter of the annular shoulder 52 and D represents the outer diameter of the inner ring 30 and of the large diameter stem portion 48. Optimum values for these dimensions have been determined empirically as follows: A = 10 mm; B = 4.6 mm; C = 12 mm; and D = 9.2 mm. In this case, it turns out that A = 1.25L and B = .75L, where L is the wavelength of the ultrasonic waves. Variations in dimensions A and B appear to have more influence than do variations in the dimensions C and D.

These dimensions were determined for a preferred horn wherein the tapered bore 14 measures 100 mm axially with a mouth diameter 53 mm and a throat diameter of 26. 7 mm where it joins with the outer ring 28. It should be understood that other dimensions would be optimal for other ultrasonic frequencies.

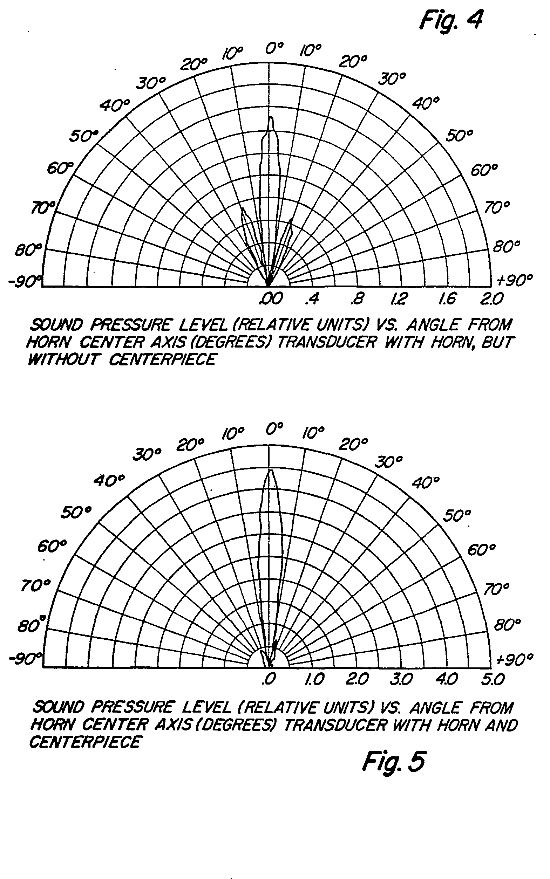

The horn and centrepiece assembly of Fig 1 produce a beam of ultrasonic sound with a narrower angular spread than that which would be produced by a horn without the centrepiece. For example, Figs 4 and 5 are plots of measured sound pressure level (in arbitrary units) against the angle from the centre axis of the horn assembly. Fig 4 illustrates the pattern of sound generated by the transducer with the horn alone. Fig 5 illustrates the pattern of sound generated by the transducer with the horn and centrepiece assembly together. It is evident from Figs 4 and 5 that the addition of the centrepiece reduces the pressure level of the side lobes relative to the main or centre lobe, and increasing the absolute pressure level of the main lobe, thus providing an effectively narrower ultrasonic pattern or beam.

The same centrepiece assembly will increase the directivity of an ultrasonic receiver if the transmitter 60 were replaced by an ultrasonic microphone.

## Claims

1. An ultrasonic horn assembly comprising a horn (12) having a bore (14) flaring from a throat (16) to a mouth (18), an ultrasonic transducer (60) mounted in the throat, and a forwardly-tapering centrepiece (40) mounted in the throat, spaced in front of the transducer, characterised in that the centrepiece (40) has a base portion (42) and a smaller diameter stem (46, 30) projecting rearwardly therefrom so as to provide a rearwardly facing annular shoulder (52) around the stem, and a blind bore (54) extending into the stem and . open rearwardly towards the transducer (60).

2. A horn assembly according to claim 1, characterised in that the blind bore (54) has a flat bottom surface (56).

3. A horn assembly according to claim 2, characterised in that the transducer (60) is closer to the flat bottom surface (56) than to the annular shoulder (52).

4. A horn assembly according to claim 2, characterised in that the transducer (60) is spaced axially from the shoulder (52) by approximately 1.25L, and from the flat bottom surface (56) of the blind bore by approximately 0.75L, where L is the wavelength of the ultrasonic waves generated or received by the transducer (60).

5. A horn assembly according to any of claims 1 to 4, characterised in that the centrepiece (40) is supported by a ring (28) which is mounted in the throat (16) of the horn, and a plurality of webs (32) extending between the ring (28) and the stem (46, 30) to support the centrepiece coaxially in the horn.

6. A horn assembly according to claim 5, characterised in that the ring (28) coaxially receives at least a part of the transducer (60).

7. A horn assembly according to claim 6, characterised in that the ring (28) includes a rear uniform diameter bore portion (36) and a front tapered bore portion (34) joined together by an internal, annular, rearwardly facing shoulder (38), the rear bore portion receiving the transducer (60) and the shoulder (38) being abutted by the transducer to maintain the transducer axially spaced from the stem (46, 30) and the webs (32).

8. A horn assembly . according to claim 7, characterised in that the tapered ring bore portion (34) forms an extension of the throat (16) of the horn bore (14). .

9. A horn assembly according to claim 7 or 8, characterised in that the webs (32) project radially inwardly from the front tapered bore portion (34) of the ring (28).

## Patentansprüche

1. Ultraschalltrichteranordnung mit einem Schalltrichter (12), der eine Bohrung (14) aufweist, die sich von einem Halsabschnitt (16) zu einer Trichtermündung (18) aufweitet, mit einem Ultraschallwandler (60), der in dem Halsabschnitt montiert ist und mit einem sich nach vorne verjüngenden Mittelstück (40), da in dem Halsabschnitt im Abstand von dem Wandler montiert ist, dadurch gekennzeichnet, daß das Mittelstück (40) einen Basisabschnitt (42) und einen Schaft (46, 30) von kleinerem Durchmesser aufweist, der von dem Basisabschnitt nach rückwärts vorspringt, so daß eine nach rückwärts weisende ringförmige Schulter (52) um den Schaft gebildet wird, und eine Sackbohrung (54) vorgesehen ist, die sich innerhalb des Schaftes erstreckt und noch rückwärts zum Wandler (60) hin offen ist.

2. Trichteranordnung nach Anspruch 1, dadurch gekennzeichnet, daß die Sackbohrung (54) eine flache Bodenfläche (56) aufweist.

3. Trichteranordnung nach Anspruch 2, dadurch gekennzeichnet, daß der Wandler (60) der flachen Bodenfläche (56) näher liegt als der ringförmigen Schulter (52).

4. Trichteranordnung nach Anspruch 2, dadurch gekennzeichnet, daß der Wandler (60) von der Schulter (52) einen axialen Abstand von annähernd 1,25 L und von der flachen Bodenfläche (56) der Sackbohrung von etwa 0,75 L aufweist, worin L die Wellenlänge die Wellenlänge der Ultraschallwellen ist, die durch den Wandler (60) erzeugt oder empfangen werden.

5. Trichteranordnung nach irgendeinem der Ansprüche 1 bis 4, dadurch gekennzeichnet, daß das Mittelstück (40) durch einen Ring (28) unterstützt ist, der in dem Halsabschnitt (16) des Schalltrichters montiert ist, und daß mehrere Stege (32) vorgesehen sind, die sich zwischen dem Ring (28) und dem Schaft (46, 30) erstrecken, um das Mittelstück koaxial in dem Schalltrichter zu unterstützen.

6. Trichteranordnung nach Anspruch 5, dadurch gekennzeichnet, daß der Ring (28) wenigstens einen Teil des Wandlers (60) koaxial aufnimmt.

7. Trichteranordnung nach Anspruch 6, dadurch gekennzeichnet, daß der Ring (28) einen ringförmigen Bohrungsabschnitt (36) von gleichförmigem Durchmesser und einen vorderen abgeschrägten Bohrungsabschnitt (34) aufweist, welche durch eine innere, ringförmige, nach rückwärts weisende Schulter (38) miteinander verbunden sind, wobei der rückwärtige Bohrungsabschnitt den Wandler (60) aufnimmt und an der Schulter (38) der Wandler anliegt, um den Wandler im axialen Abstand von dem Schaft (46, 30) und den Stegen (32) zu halten.

8. Trichteranordnung nach Anspruch 7, dadurch gekennzeichnet, daß der zugeschrägt verlaufende Bohrungsabschnitt (34) des Ringes eine Verlängerung des Halsabschnittes (16) der Trichterbohrung (14) bildet.

9. Trichteranordnung nach Anspruch 7 oder 8, dadurch gekennzeichnet, daß die Stege (32) radial nach innen von dem vorderen abgeschrägt zulaufenden Bohrungsabschnitt (34) des Ringes (28) vorspringen.

**Revendications**

1. Ensemble à pavillon ultrasonore comportant un pavillon (12) possédant un perçage (14) s'élargissant depuis un col (16) en direction d'une embouchure (18), un transducteur à ultrasons (60) monté dans le col et une pièce centrale (40) possédant une forme conique vers l'avant et montée dans le col à distance et en avant du transducteur, caractérisé en ce que la pièce centrale (40) comporte une partie de base (42) et une tige (46, 30) de diamètre plus faible, qui fait saillie vers l'arrière à partir de la partie de base de manière à former un épaulement annulaire (52) tourné vers l'arrière et s'étendant autour de la tige, et un perçage borgne (54) pénétrant dans la tige et s'ouvrant vers l'arrière en direction du transducteur (60).

2. Ensemble à pavillon selon la revendication 1, caractérisé en ce que le perçage borgne (54) comporte un fond possédant une surface plane (56).

3. Ensemble à pavillon selon la revendication 2, caractérisé en ce que le transducteur (60) est plus rapproché de la surface plane du fond (56) que de l'épaulement annulaire (52).

4. Ensemble à pavillon selon la revendication 2, caractérisé en ce que le transducteur (60) est séparé axialement de l'épaulement (52) par une distance égale à environ 1,25L et est séparé de la surface plane (56) du fond du perçage borne par une distance égale à environ 0,75L, L désignant la longueur d'onde des ondes ultrasonores produites ou reçues par le transducteur (60).

5. Dispositif à pavillon selon l'une quelconque des revendications 1 à 4, caractérisé en ce que la partie centrale (40) est supportée par un anneau (28), qui est monté dans le col (16) du pavillon, et par une pluralité de languettes (32) s'étendant entre l'anneau (28) et la tige (46, 30) et servant à supporter coaxialement la pièce centrale dans le pavillon.

6. Ensemble à pavillon selon la revendication 5, caractérisé en ce que l'anneau (28) reçoit coaxialement au moins une partie du transducteur (60).

7. Ensemble à pavillon selon la revendication 6, caractérisé en ce que l'anneau (28) comporte un élément de perçage arrière de diamètre uniforme (36) et un élément de perçage avant conique (34), qui sont réunis par un épaulement annulaire intérieur (38) tourné vers l'arrière, l'élément de perçage arrière logeant le transducteur (60), et l'épaulement (38) étant en butée contre le transducteur de manière à maintenir le transducteur écarté axialement de la tige (46, 30) et des languettes (32).

8. Ensemble à pavillon selon la revendication 7, caractérisé en ce que l'élément de perçage annulaire conique (34) constitue un prolongement du col (16) du perçage (14) du pavillon.

9. Ensemble à pavillon selon la revendication 6, 7 ou 8, caractérisé en ce que les languettes (32) font saillie radialement vers l'intérieur à partir de l'élément de perçage avant conique (34) de l'anneau (28).

Fig. 1

Fig. 2

Fig. 3

*Fig. 4*

SOUND PRESSURE LEVEL (RELATIVE UNITS) VS. ANGLE FROM HORN CENTER AXIS (DEGREES) TRANSDUCER WITH HORN, BUT WITHOUT CENTERPIECE

SOUND PRESSURE LEVEL (RELATIVE UNITS) VS. ANGLE FROM HORN CENTER AXIS (DEGREES) TRANSDUCER WITH HORN AND CENTERPIECE

*Fig. 5*

2